# EUROPÄISCHE PATENTSCHRIFT

(11) **EP 2 617 873 B1**
(45) Veröffentlichungstag und Bekanntmachung des Hinweises auf die Patenterteilung: **25.06.2014**
(21) Anmeldenummer: 12151580.3
(22) Anmeldetag: 18.01.2012
(51) Int. Cl.: C25B 1/04, C25B 15/02, C25B 15/08

(54) **Elektrolyseeinrichtung**
Electrolysis device
Dispositif d'électrolyse

(43) Veröffentlichungstag der Anmeldung: 24.07.2013
(73) Patentinhaber: H-TEC Systems GmbH, 23558 Lübeck (DE)
(72) Erfinder: Wilken, Dennis, 23847 Kastorf (DE); Mantai, Nils, 23560 Lübeck (DE); Küter, Uwe, 23560 Lübeck (DE); Höller, Stefan, 23552 Lübeck (DE); Würfel, Claus, 23558 Lübeck (DE)
(74) Vertreter: Patentanwälte Vollmann & Hemmer

(56) Entgegenhaltungen:
- DE-A1- 2 529 036
- DE-A1-102004 026 281
- US-A1- 2002 017 463
- US-A1- 2011 057 455

## Beschreibung

Die Erfindung betrifft eine Elektrolyseeinrichtung gemäß den im Oberbegriff des Anspruchs 1 angegebenen Merkmalen.

Im Stand der Technik sind Elektrolyseeinrichtungen bekannt, welche einen Elektrolyseur zur elektrolytischen Zerlegung von Wasser zu Wasserstoff und Sauerstoff verwenden. In einem Wasserkreislauf einer derartigen Elektrolyseeinrichtung wird dabei dem Elektrolyseur Wasser aus einem Sammelbehälter mittels einer Pumpe zugeführt. Aus dem Elektrolyseur tritt dann an einer Seite Wasserstoff aus, der gezielt abgeführt wird. An einer anderen Seite tritt ein Sauerstoff-Wasser-Gemisch aus, welches wieder dem Sammelbehälter zugeführt wird, in welchem dann eine Gas-Wasser-Trennung erfolgt. Alle Komponenten der Elektrolyseeinrichtung, d. h. der Sammelbehälter, die Pumpe, ein Wärmetauscher zur Wärmeabfuhr, ein Filter und der Elektrolyseur bzw. Elektrolysestack sind bei den im Stand der Technik bekannten Konfigurationen in Reihe verbaut, so dass ein einziger Wasserstrom all diese Komponenten durchströmt.

Es gibt verschiedene Typen von Elektrolyseuren, unter anderem den sogenannten sauren oder Protonen-Austausch-Membran-Elektrolyseur (PEM), der eine protonendurchlässige Polymermembran umfasst und daher nur mit destilliertem Wasser arbeiten kann, da diese ansonsten beschädigt wird.

Beim Betrieb der Elektrolyseeinrichtung stellt hierbei die zum Zuführen des Wassers zu dem Elektrolyseur verwendete Pumpe einen begrenzenden Faktor dar, da aufgrund des in dem Kreislauf verwendeten destillierten Wassers, welches äußerst aggressiv ist, lediglich kunststoffausgekleidete anstelle von edelstahlausgekleideten Pumpen verwendet werden können. Diese können jedoch lediglich bei Temperaturen bis maximal 80 °C betrieben werden, was aufgrund der oben bereits beschriebenen Reihenanordnung der Komponenten der Elektrolyseeinrichtung problematisch ist. Wie bereits erwähnt wird bei der bekannten Konfiguration das Wasser im Kreis umgepumpt. Da sich die zu verwendenden Kreiselpumpen schlecht entlüften lassen, ist ihre Position in dem Wasserkreislauf zweckmäßigerweise direkt hinter dem Sammelbehälter zur Gas-Wasser-Trennung, in welchen jedoch direkt das vom Elektrolyseur abgeführte und durch diesen stark erwärmte Wasser eingeleitet wird. Somit hat dieser Aufbau den Nachteil, dass die temperaturempfindliche Pumpe mit einer sehr hohen Wassertemperatur beaufschlagt wird.

Auch ist es aufgrund des hohen Anteils an Gasblasen in dem vom Elektrolyseur abgeleiteten Wassers nicht möglich, einen Wärmetauscher zum Kühlen des vom Elektrolyseur erwärmten Wassers diesem direkt nachzuschalten. Vielmehr wird der Wärmetauscher in den aus dem Stand der Technik bekannten Konfigurationen stromabwärts der Pumpe angeordnet, was jedoch wiederum zu dem Nachteil führt, dass das dem Elektrolyseur zugeführte Wasser durch den Wärmetauscher abgekühlt wird, wodurch sowohl der Wirkungsgrad des Elektrolyseurs als auch dessen Leistung abnimmt.

US 2011/057455 offenbart ein Elektrolysesystem mit einem Reaktor von der ein Wasserkreislauf durch eine Fluidleitung über eine erste Wasserpumpe in einen Hochdruck-Wärmetauscher geleitet wird, in welchem das Wasser gekühlt wird, bevor es über die Fluidleitung in den Reaktor zurückgeführt wird. Eine zweite Pumpe pumpt Wasser aus einem Niederdruck-Wärmetauscher über eine sekundäre Fluidleitung und leitet das Wasser dann in den Hochdruck-Wärmetauscher. Erwärmtes Wasser aus dem Hochdruck-Wärmetauscher wird über die sekundäre Fluidleitung dann zurück zu dem Niederdruck-Wärmetauscher geleitet.

DE 25 29 036 A1 beschreibt einen Wasserstoff-Erzeuger, der mindestens eine galvanische Zelle enthält, die eine aktive Magnesium-Primär-Elektrode und eine nicht aktive Sekundär-Elektrode einschließt, die so angepasst sind, um in eine Salzwasserlösung, die in einem Tank enthalten ist, eingetaucht zu werden, wobei dieser Tank einen Wasserstoffauslass oberhalb des Elektrolyt-Spiegels aufweist.

DE 10 2004 026281 A1 beschreibt eine Vorrichtung zum Erzeugen von Wasserstoff mittels mindestens einer Solarzelle, wobei die Solarzelle räumlich mindestens einer eine Elektrolyt beinhaltende Elektrolysezelle zugeordnet ist. Die mit stark gebündeltem Sonnenlicht betreibbare Solarzelle ist durch den die Elektrolysezelle durchströmenden Elektrolyt kühlbar.

US 2002/017463 A1 beschreibt eine Vorrichtung zur Erzeugung von elektrischer Energie und Wasserstoff, welche ein erstes System, welches mit einer Wasserquelle verbunden ist und ein zweites System aufweist, welches mit dem ersten System verbindbar ist und ausgelegt ist, um Wasserstoff und Sauerstoff zu erzeugen.

Daher ist es eine Aufgabe der vorliegenden Erfindung, eine Elektrolyseeinrichtung bereitzustellen, welche diese Nachteile zumindest teilweise vermeidet.

Diese Aufgabe wird durch eine Elektrolyseeinrichtung gemäß Anspruch 1 gelöst. Vorteilhafte Weiterbildungen der Erfindung sind in den Unteransprüchen und der nachfolgenden Beschreibung angegeben.

Erfindungsgemäß wird eine Elektrolyseeinrichtung mit einem Wasserkreislauf bereitgestellt, in welchem ein Elektrolyseur, ein Sammelbehälter und zumindest eine Pumpe angeordnet sind, wobei das Wasser mittels der zumindest einen Pumpe aus dem Sammelbehälter zu dem Elektrolyseur gepumpt wird, wobei der Wasserkreislauf in zumindest einen ersten Zweig und einen zu dem ersten Zweig parallelen zweiten Zweig verzweigt ist, wobei der Elektrolyseur in dem ersten Zweig angeordnet ist, und wobei ein Wärmetauscher zum Kühlen des Wassers in dem zweiten Zweig angeordnet ist.

Grundgedanke der vorliegenden Erfindung ist es, nicht den dem Elektrolyseur zugeführten Wasserstrom zu kühlen, sondern die Kühlung in einem Nebenstrom erfolgen zu lassen. Auf diese Weise kann einerseits die maximal für den Betrieb der Pumpe zulässige Temperatur ausgenutzt werden und andererseits der Elektrolyseur mit Wasser dieser Temperatur gespeist werden, was den Wirkungsgrad erhöht. Die Kühlung erfolgt im Nebenstrom und hat daher unmittelbar auf den Elektrolyseprozess keinen Einfluss.

Gemäß einer bevorzugten Ausführungsform verzweigt der Wasserkreislauf stromabwärts der zumindest einen Pumpe in den zumindest einen ersten Zweig und den zweiten Zweig. Diese Kreislaufanordnung hat den Vorteil, dass die Umwälzung des Wassers in beiden Zweigen mit nur einer Pumpe erfolgen kann.

Vorteilhaft weist der erste Zweig einen ersten Rücklauf auf, welcher in den Sammelbehälter mündet.

Es ist darüber hinaus vorteilhaft, wenn der zweite Zweig einen zweiten Rücklauf aufweist, welcher in den Sammelbehälter mündet.

Vorzugsweise ist der Sammelbehälter zur Gas-Wasser-Trennung ausgelegt.

Besonders bevorzugt ist es, wenn der Elektrolyseur ein Protonen-Austausch-Membran-Elektrolyseur ist.

Gemäß noch einer weiteren bevorzugten Ausführungsform wird das Wasser des Wasserkreislaufs in dem zweiten Zweig mittels einer weiteren Pumpe aus dem Sammelbehälter zu dem Wärmetauscher gepumpt.

Weiterhin ist vorzugsweise ein Filter in dem Wasserkreislauf, insbesondere in dem ersten Zweig stromaufwärts des Elektrolyseurs, angeordnet.

Durch die erfindungsgemäße Konfiguration der Elektrolyseeinrichtung ist es möglich, das Wasser bereits vor der Pumpe zu kühlen, aber gleichzeitig den Elektrolyseur selbst mit höher temperiertem Wasser zu versorgen bzw. ihn so mit einer höheren Wassertemperatur zu betreiben, so dass der Wirkungsgrad der Anlage verbessert werden kann.

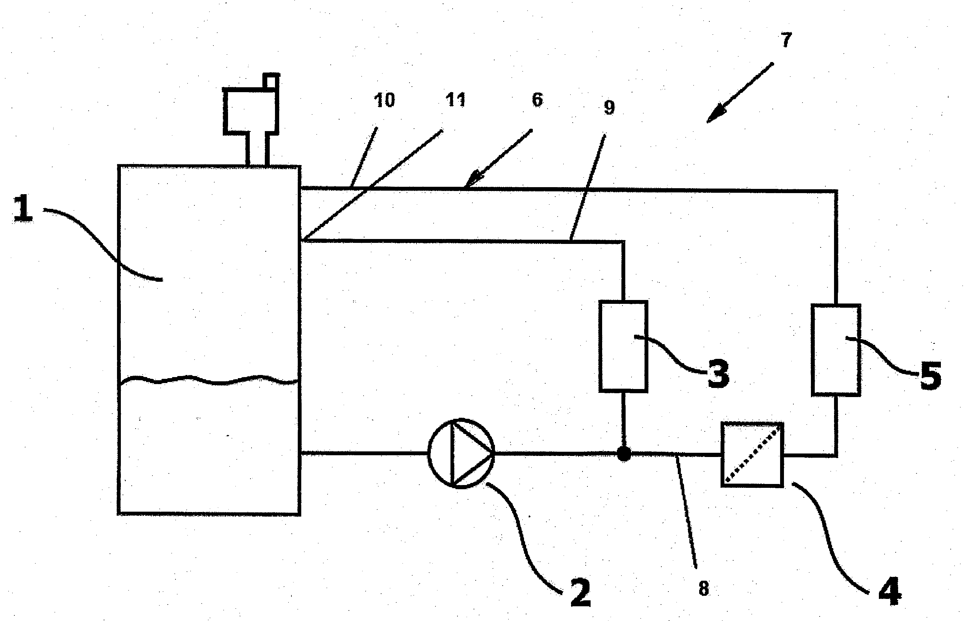

Die Erfindung ist nachfolgend anhand eines in der Zeichnung dargestellten Ausführungsbeispiels näher beschrieben. Es zeigt die Figur eine schematische Darstellung eines Wasserkreislaufs einer Elektrolyseeinrichtung gemäß einer Ausführungsform der Erfindung.

In der Figur ist ein Wasserkreislauf 6 einer Elektrolyseeinrichtung 7 gemäß einer Ausführungsform der Erfindung dargestellt. In dem Wasserkreislauf 6 sind ein Sammelbehälter 1 zur Gas-Wasser-Trennung, eine Pumpe 2, ein Wärmetauscher 3, ein Filter 4 und ein Elektrolyseur 5 zur Zerlegung von Wasser in Wasserstoff und Sauerstoff angeordnet. Bei dem Elektrolyseur 5 handelt es sich um einen Protonen-Austausch-Membran-Elektrolyseur (PEM), und folglich wird der Wasserkreislauf 6 mit destilliertem Wasser betrieben.

Im Gegensatz zu im Stand der Technik bekannten Konfigurationen, bei denen Sammelbehälter 1, Pumpe 2, Wärmetauscher 3, Filter 4 und Elektrolyseur 5, wie bereits erläutert, in Reihe verbaut sind, so dass nur ein einziger Wasserstrom alle genannten Komponenten durchströmt, ist hier der Wasserkreislauf 6 in einen ersten Zweig 8 und einen zu dem ersten Zweig 8 parallelen zweiten Zweig 9 verzweigt. Die Verzweigung des von der Pumpe 2 aus dem Sammelbehälter 1 gepumpten Wasserstroms erfolgt dabei direkt hinter bzw. stromabwärts der Pumpe 2 und vor bzw. stromaufwärts des Filters 4.

Der Filter 4 und der Elektrolyseur 5, der die Wärme in den Wasserkreislauf 6 einbringt, sind in dem ersten Zweig 8 angeordnet. In dem zweiten Zweig 9 befindet sich der Wärmetauscher 3 zum Kühlen des Wassers.

Ein erster Rücklauf 10 des ersten Zweigs 8 und ein zweiter Rücklauf 11 des zweiten Zweigs 9 münden in den Sammelbehälter 1 zur Gas-Wasser-Trennung, in dem sich nun das von dem Wärmetauscher 3 gekühlte und das von dem Elektrolyseur 5 erwärmte Wasser mischen. Somit wird im Gegensatz zu der Konfiguration, die aus dem Stand der Technik bekannt ist, bei der lediglich das von dem Elektrolyseur 5 erwärmte Wasser in den Sammelbehälter 1 zurückläuft, eine niedrigere Wassertemperatur in dem Sammelbehälter 1 erzielt. Da das Wasser auf diese Weise bereits vor der Pumpe 2, die das Wasser aus dem Sammelbehälter 1 pumpt, herunter gekühlt wird, ist es problemlos möglich, eine Pumpe 2 zu verwenden, die mit Kunststoff ausgekleidet ist. Gleichzeitig kann aber durch diese Konfiguration auch der Elektrolyseur 5 mit einer höheren Betriebstemperatur betrieben werden und dadurch der Wirkungsgrad und dessen Leistung erhöht werden.

Gemäß einer weiteren, hier nicht dargestellten Ausführungsform ist es darüber hinaus möglich, dass sowohl der erste Zweig 8 als auch der zweite Zweig 9 jeweils durch eine eigene Pumpe versorgt werden. Darüber hinaus ist es gemäß noch einer weiteren Ausführungsform möglich, den Wasserkreislauf 6 in mehr als zwei Zweige aufzuteilen.

### Bezugszeichenliste

- 1: Sammelbehälter
- 2: Pumpe
- 3: Wärmetauscher
- 4: Filter
- 5: Elektrolyseur
- 6: Wasserkreislauf
- 7: Elektrolyseeinrichtung
- 8: erster Zweig
- 9: zweiter Zweig
- 10: erster Rücklauf
- 11: zweiter Rücklauf

## Patentansprüche

1. Elektrolyseeinrichtung (7) mit einem Wasserkreislauf (6), in welchem ein Elektrolyseur (5), ein Sammelbehälter (1) und zumindest eine Pumpe (2) angeordnet sind, wobei das Wasser mittels der zumin-dest einen Pumpe (2) aus dem Sammelbehälter (1) zu dem Elektrolyseur (5) gepumpt wird,
**dadurch gekennzeichnet, dass**
der Wasserkreislauf (6) in zumindest einen ersten Zweig (8) und einen zu dem ersten Zweig (8) parallelen zweiten Zweig (9) verzweigt ist, wobei der Elektrolyseur (5) in dem ersten Zweig (8) angeordnet ist, und wobei ein Wärmetauscher (3) zum Kühlen des Wasser in dem zweiten Zweig (9) angeordnet ist.

2. Elektrolyseeinrichtung (7) gemäß Anspruch 1, **dadurch gekennzeichnet, dass**
der Wasserkreislauf (6) stromabwärts der zumindest einen Pumpe (2) in den zumindest einen ersten Zweig (8) und den zweiten Zweig (9) verzweigt.

3. Elektrolyseeinrichtung (7) gemäß Anspruch 1 oder 2, **dadurch gekennzeichnet, dass**
der erste Zweig (8) einen ersten Rücklauf (10) aufweist, welcher in den Sammelbehälter (1) mündet.

4. Elektrolyseeinrichtung (7) gemäß einem der Ansprüche 1 bis 3, **dadurch gekennzeichnet, dass**
der zweite Zweig (9) einen zweiten Rücklauf (11) aufweist, welcher in den Sammelbehälter (1) mündet.

5. Elektrolyseeinrichtung (7) gemäß einem der Ansprüche 1 bis 4, **dadurch gekennzeichnet, dass**
der Sammelbehälter (1) zur Gas-Wasser-Trennung ausgelegt ist.

6. Elektrolyseeinrichtung (7) gemäß einem der Ansprüche 1 bis 5, **dadurch gekennzeichnet, dass**
der Elektrolyseur (5) ein Protonen-Austausch-Membran-Elektrolyseur ist.

7. Elektrolyseeinrichtung (7) gemäß einem der Ansprüche 1 bis 6, **dadurch gekennzeichnet, dass**
das Wasser des Wasserkreislaufs (6) in dem zweiten Zweig (9) mittels einer weiteren Pumpe (2) aus dem Sammelbehälter (1) zu dem Wärmetauscher (3) gepumpt wird.

8. Elektrolyseeinrichtung (7) gemäß einem der Ansprüche 1 bis 7, **dadurch gekennzeichnet, dass**
in dem Wasserkreislauf (6), insbesondere in dem ersten Zweig (8) stromaufwärts des Elektrolyseurs (5), ein Filter (4) angeordnet ist.

## Claims

1. An electrolysis device (7) with a water circuit (6), in which an electrolyser (5), a collection container (1) and at least one pump (2) are arranged, wherein the water is pumped by way of at least one pump (2) out of the collection container (1) to the electrolyser (5), **characterised in that** the water circuit (6) is branched into at least one first branch (8) and into a second branch (9) which is parallel to the first branch (8), wherein the electrolyser (5) is arranged in the first branch (8) and wherein a heat exchanger (3) for cooling the water is arranged in the second branch (9).

2. An electrolysis device (7) according to claim 1, **characterised in that** the water circuit (6) branches downstream of the at least one pump (2), into the at least one first branch (8) and the second branch (9).

3. An electrolysis device (7) according to claim 1 or 2, **characterised in that** the first branch (8) comprises a first return (10) which runs out into the collection container (1).

4. An electrolysis device (7) according to one of the claims 1 to 3, **characterised in that** the second branch (9) comprises a second return (11) which runs out into the collection container (1).

5. An electrolysis device (7) according to one of the claims 1 to 4, **characterised in that** the collection container (1) is designed for gas-water separation.

6. An electrolysis device (7) according to one of the claims 1 to 5, **characterised in that** the electrolyser (5) is a proton exchange membrane electrolyser.

7. An electrolysis device (7) according to one of the claims 1 to 6, **characterised in that** the water of the water circuit (6) in the second branch (9) is pumped by way of a further pump (2) out of the collection container (1) to the heat exchanger (3).

8. An electrolysis device (7) according to one of the claims 1 to 7, **characterised in that** a filter (4) is arranged in the water circuit (6), in particular in the first branch (8) upstream of the electrolyser (5).

## Revendications

1. Dispositif d'électrolyse (7) comprenant un circuit d'eau (6) dans lequel sont montés un électrolyseur (5), un récipient collecteur (1) et au moins une pompe (2), et dans lequel l'eau est refoulée du récipient collecteur (1) à l'électrolyseur (5) au moyen de ladite pompe (2), au moins au nombre de une,
**caractérisé en ce que** le circuit d'eau (6) est divisé en au moins une première branche (8) et une seconde branche (9) parallèle à la première branche (8), l'électrolyseur (5) étant monté dans la première branche (8) et un échangeur de chaleur (3) destiné à refroidir l'eau étant monté dans la seconde branche (9).

2. Dispositif d'électrolyse (7) selon la revendication 1, **caractérisé en ce que** le circuit d'eau (6) est divisé en ladite première branche (8), au moins au nombre de une, et la seconde branche (9) en aval de ladite pompe (2), au moins au nombre de une.

3. Dispositif d'électrolyse (7) selon la revendication 1 ou 2, **caractérisé en ce que** la première branche (8) présente un premier retour (10), lequel débouche dans le récipient collecteur (1).

4. Dispositif d'électrolyse (7) selon l'une des revendications 1 à 3, **caractérisé en ce que** la seconde branche (9) présente un second retour (11), lequel débouche dans le récipient collecteur (1).

5. Dispositif d'électrolyse (7) selon l'une des revendications 1 à 4, **caractérisé en ce que** le récipient collecteur (1) est conçu pour la séparation gaz-eau.

6. Dispositif d'électrolyse (7) selon l'une des revendications 1 à 5, **caractérisé en ce que** l'électrolyseur (5) est un électrolyseur à membrane d'échange de protons.

7. Dispositif d'électrolyse (7) selon l'une des revendications 1 à 6, **caractérisé en ce que** l'eau du circuit d'eau (6) contenue dans la seconde branche (9) est refoulée du récipient collecteur (1) dans l'échangeur de chaleur (3) au moyen d'une autre pompe (2).

8. Dispositif d'électrolyse (7) selon l'une des revendications 1 à 7, **caractérisé en ce qu'**un filtre (4) est monté dans le circuit d'eau (6), en particulier dans la première branche (8), en amont de l'électrolyseur (5).
